# FASCICULE DE BREVET EUROPEEN

(11) **EP 0 606 788 B1**
(45) Date de publication et mention de la délivrance du brevet: **01.09.1999**
(21) Numéro de dépôt: 93402927.3
(22) Date de dépôt: 02.12.1993
(51) Int. Cl.: G06F 9/44, G05D 1/00

(54) **Procédé de structuration d'informations utilisées dans un processus industriel et son application à l'assistance au pilotage d'un aérodyne**
Verfahren zum Strukturieren von in einem industriellen Prozess verwendeten Informationen und Anwendung als Flugzeugführungshilfe
Process for structuring information used in an industrial process and its application as aerodyne piloting assistance

(30) Priorité: 12.01.1993 FR 9300377
(43) Date de publication de la demande: 20.07.1994
(73) Titulaire: SEXTANT AVIONIQUE, 92366 Meudon la Forêt Cédex (FR)
(72) Inventeur: Bomans, Muriel, F-78280 Guyancourt (FR); Pierre, Francine, F-75004 Paris (FR); Robin, Hugues, F-44340 Bouguenais (FR)
(74) Mandataire: de Saint-Palais, Arnaud Marie

(56) Documents cités:
- COMPUTER vol. 18, no. 8 , Aoüt 1985 , LONG BEACH US pages 27 - 35 G. BROWN ET AL : 'Program Visualization: Graphical Support for Software Development'
- TOOLS'89 : TECHNOLOGY OF OBJECT-ORIENTED LANGUAGES AND SYSTEMS PROCEEDINGS 13 Novembre 1989 , PARIS, FRANCE pages 76 - 84 R. JOCHEM ET AL: 'An Object Oriented Analysis and Design Methodology for Computer Integrated Manufacturing Systems'
- COMPUTER vol. 22, no. 10 , Octobre 1989 , LONG BEACH US pages 9 - 22 A. AMBLER ET AL : 'Influence of Visual Technology on the Evolution of Language Environments'

## Description

La présente invention concerne un procédé de structuration d'informations utilisées dans un processus industriel nécessitant un volume important d'informations de types et de structures hétérogènes et provenant de sources très diverses.

Elle s'applique notamment, mais non exclusivement, à l'aviation civile où une masse importante d'informations est utilisée à bord des aérodynes. Ces informations concernent par exemple, les différentes procédures à exécuter lors de chaque étape de vol, les données nécessaires à la conduite d'un vol et la surveillance des différents organes des aérodynes.
Ces informations proviennent de sources diverses, notamment, des constructeurs d'aérodynes, des équipementiers, des fournisseurs de cartes de navigation, des compagnies aériennes, ou encore des calculateurs embarqués.

De ce fait, leur type et leur structure peuvent être très différents, d'où une difficulté pour pouvoir les exploiter, et notamment pour les consulter. Ces informations sont en général rassemblées par les compagnies aériennes au profit des pilotes et mécaniciens de bord.

Pour faciliter l'échange et l'exploitation de toutes ces informations, on a déjà proposé un langage informatique permettant de définir des structures de données qui sont ensuite associées aux informations elles-mêmes afin de pouvoir les saisir et les exploiter indépendamment de leur source ou de leur destination. Ces structures de données ont été appelées structures logiques.

Or, il s'avère qu'un même ensemble d'informations, peut être associé à plusieurs structures logiques en fonction de l'utilisateur de ces informations, de ses besoins de production, et de ses méthodes d'exploitation et de consultation dans le cadre de la conduite d'un processus.

De ce fait, l'utilisateur est bien souvent amené à redéfinir ces structures logiques pour les adapter à ses propres besoins.

Or, à l'heure actuelle, pour pouvoir définir une structure logique, il est nécessaire de la dessiner sous la forme d'un graphe à l'aide d'un formalisme graphique qui n'est pas standardisé, puis de transcrire ce graphe en langage informatique. Ce processus implique donc une connaissance approfondie de ce langage informatique, qui n'est accessible, comme la plupart des langages informatiques, qu'aux spécialistes.

Puisque chaque compagnie aérienne possède des besoins spécifiques en ce qui concerne l'exploitation et la consultation de ces informations, et qu'en général, elle ne dispose pas des compétences permettant de définir des structures logiques, elle ne peut participer entièrement à la définition et à la validation des structures d'informations dont elle a besoin.

On connait par ailleurs des outils graphiques de programmation de "Program Visualization: Graphical Support for Software development" publié par G. Brown et al. en août 1985, aux pages 27-35 de COMPUTER vol. 18, N° 18, de "An Object-Oriented Analysis and Design Methodology for Computer Integrated Manufacturing Systems" publié par R Jochem et al. le 13 novembre 1989 aux pages 76-84 de TOOLS'89 : Technology of.Object-Oriented Languages and Systems Proceedings, ou encore de "Influence of Visual Technology on the Evolution of Language Environments" publié par A. Ambler et al. le 10 octobre 1989, aux pages 9-22 de COMPUTER vol. 22. Toutefois, ces outils s'appliquent exclusivement à la réalisation de logiciels et visent donc par définition a créer des fonctions complexes en combinant des opérations de base et des fonctions élémentaires issues de bibliothèques, et non pas à organiser des ensembles d'informations complexes préexistants.

La présente invention a pour but de supprimer ces inconvénients, et notamment, de permettre de collecter rapidement des informations provenant de sources nombreuses, d'aider les utilisateurs à formuler eux-mêmes leurs propres besoins concernant l'organisation de ces informations et la façon dont elles seront exploitées, ceci indépendamment de leur présentation.

A cet effet, elle propose un procédé de structuration d'un ensemble d'informations utilisées dans un processus industriel, mettant en oeuvre un terminal comprenant un processeur, un écran et un clavier donnant accès à des commandes qui permettent d'introduire et de représenter à l'écran des symboles graphiques et leurs caractéristiques, en vue d'élaborer un graphe représentant un modèle de structure d'informations, ce graphe faisant intervenir au moins des symboles d'un premier type représentant des noeuds, et des symboles d'un second type établissant des liens entre les noeuds.

Ce procédé comprend les phases successives suivantes :
- la décomposition de proche en proche de l'ensemble d'informations en sous-ensembles et l'identification de la structure de chacun de ces derniers ;
- le regroupement par structures analogues des sous-ensembles en objets ;
- la détermination de caractéristiques propres à chaque objet ;
- l'introduction dans le terminal de commandes assurant l'affichage de chaque objet sous la forme d'un symbole de type noeud et de ses caractéristiques ;
- l'introduction dans le terminal de symboles de type lien de construction entre les objets, en précisant leurs type et leurs caractéristiques, ces liens indiquant une relation hiérarchique d'inclusion entre deux objets ;
- l'élaboration par le processeur, à partir du graphe introduit dans le terminal, du modèle de structure de l'ensemble d'informations exprimé dans un langage informatique approprié, et
- le contrôle par le processeur de la cohérence du modèle.

A partir du moment où un objet apparait dans un modèle de structure, il apparait nécessairement dans tous les ensembles d'informations structurés par ce modèle. Cependant, ces objets peuvent présenter les deux propriétés suivantes qui peuvent se cumuler :
- "optionnel" indiquant que l'objet n'apparaît pas nécessairement dans un ensemble d'informations structuré par le modèle, et
- "liste" indiquant que l'objet représente en fait une séquence d'un ou plusieurs sous-ensembles de mêmes structures.

En outre, un premier objet d'un modèle de structure peut être lié hiérarchiquement par des liens de construction à plusieurs seconds objets de manière à former des structures de types suivants :
- "alternatif" dans laquelle un seul des seconds objets doit apparaître dans chaque ensemble d'informations structuré par ce modèle ;
- "séquence" dans laquelle les seconds objets apparaissent toujours dans l'ordre indiqué sur le graphe (numéro à proximité du lien) dans chaque ensemble d'informations structuré par ce modèle ; et
- "agrégat" dans laquelle les seconds objets apparaissent dans un ordre quelconque dans les ensembles d'informations structurés par ce modèle.

Grâce à ce procédé, il n'est plus nécessaire de maîtriser un langage informatique de définition de structures d'informations. Il suffit simplement de connaître le formalisme graphique utilisé par le procédé qui est beaucoup plus facilement accessible.

Ainsi, il permet à des utilisateurs non initiés, comme les compagnies aériennes, de définir eux-mêmes les modèles de structures dont ils ont besoin.

Par ailleurs, chaque caractéristique d'objet est définie par un type, et une valeur par défaut qui doit être compatible avec son type.

Avantageusement, il est également possible d'établir des liens de référence entre les objets pour indiquer que deux objets font référence l'un à l'autre.

Avantageusement, en plus du contrôle de cohérence effectué en fin de construction du graphe, le processeur du terminal mis en oeuvre par le procédé effectue des contrôles dynamiques après chaque commande de construction du graphe effectuée par l'opérateur. Ces contrôles consistent notamment à n'autoriser que les créations de liens et les manipulations possibles.

Selon une particularité de l'invention, ce procédé comprend également la conversion d'un modèle de structure logique, exprimé dans le langage informatique, en un graphe établi conformément au procédé selon l'invention. De cette manière, il est possible de modifier un modèle de structure existant à partir de sa représentation graphique et non de son expression dans le langage informatique.

Le procédé selon l'invention s'applique tout particulièrement à l'assistance au pilotage d'un aérodyne, laquelle fait intervenir une pluralité de listes de tâches que le pilote doit accomplir impérativement durant chaque phase de pilotage, ces listes étant stockées dans la mémoire d'un calculateur à base de processeurs, embarqué à bord de l'aérodyne, et comprenant au moins un terminal de communication homme/machine. Chacune de ces listes définit l'enchaînement des différentes actions et vérifications qui doivent être effectuées au cours d'une phase de pilotage aussi bien au sol qu'en vol.
D'autres listes de tâches servent notamment pour traiter les pannes et les situations d'urgence.
Habituellement chacune de ces listes se présente sous la forme d'une succession de tâches qui apparaissent dans l'ordre suivant lequel celles-ci doivent être exécutées.

A chacune de ces listes correspondent des commentaires détaillés situés dans un autre ensemble d'informations, et portant sur la liste en général et ses conditions d'utilisation, ainsi que les détails et particularités de chacune des tâches.

Ces informations commencent à être produites et fournies sous la forme de fichiers informatiques par les constructeurs d'aérodynes et par les équipementiers.

Grâce au procédé selon l'invention, les compagnies aériennes vont pouvoir définir elles-mêmes, sans compétences particulières, les modèles de structures et les structures à donner à toutes ces informations, en fonction de leurs propres modes de mise à jour et de consultation.

Ces informations ainsi structurées pourront être ensuite stockées dans la mémoire du calculateur embarqué à bord de l'aérodyne et utilisées à partir du terminal connecté au calculateur.

Avantageusement, durant l'exécution sur le terminal embarqué des tâches définies dans des listes possédant une structure, le procédé selon l'invention comprend :
- l'enchaînement automatique, sur le terminal, des différentes listes à chaque nouvelle phase de pilotage, et le déclenchement automatique de la liste de tâches appropriée dans le cas d'une panne identifiée, à l'aide des objets définissant la structure des listes de tâches et des liens établis entre ces objets ;
- à chaque fin d'exécution d'une tâche, le marquage de la tâche suivante à effectuer, grâce à l'identification des objets définissant la structure des tâches ; et
- la visualisation sur l'écran du terminal de commentaires concernant la tâche et la liste de tâches en cours d'exécution, à l'aide des objets définissant la structure des tâches, listes de tâches et ensembles de commentaires, et des liens entre ces objets.

Un mode de réalisation du terminal selon l'invention sera décrit ci-après, à titre d'exemple non limitatif, avec référence aux dessins annexés dans lesquels :
la figure 1 représente l'écran du terminal montrant un graphe conformément au procédé selon l'invention ;
la figure 2 représente le graphe du modèle de la structure des informations nécessaires à l'assistance au pilotage d'un aérodyne ;
la figure 3 montre le code généré à partir du graphe de la figure 2 ;
la figure 4 montre comment les informations sont structurées par le modèle de structure à l'aide du code généré ;
la figure 5 montre un exemple de mise en page possible à partir des informations indiquées sur la figure 4 ;
la figure 6 représente un graphe de structure qui découle de l'application du graphe représenté sur la figure 2 à une liste particulière ;
la figure 7 est une représentation schématique de l'architecture d'un système embarqué à bord d'un aérodyne mettant en oeuvre l'application du procédé au processus industriel d'assistance au pilotage d'un aérodyne ;
les figures 8 à 13 représentent les différents écrans enchaînés par le système durant l'exécution d'une liste de tâches.

Le procédé selon l'invention utilise un terminal à base de processeurs comprenant un écran de visualisation et un clavier permettant d'actionner des commandes en vue de définir un modèle de structure d'ensemble d'informations à l'aide d'un formalisme graphique.

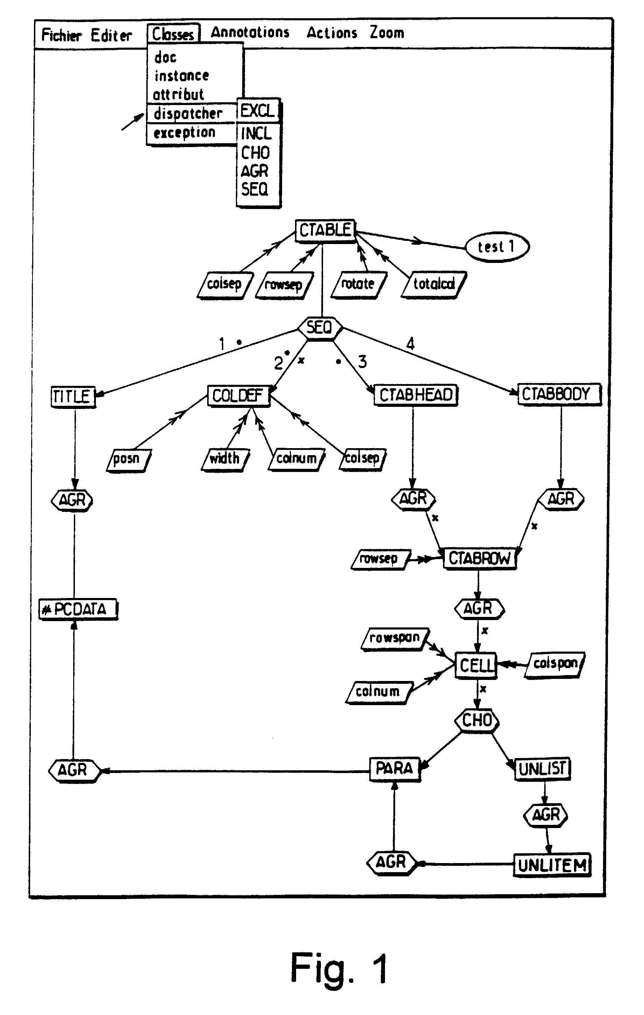

La figure 1 représente une page affichée sur l'écran du terminal. Cette page montre le graphe d'un modèle de structure. En haut de cette page figurent les commandes qu'il est possible d'actionner, par exemple à l'aide d'un curseur que l'on peut déplacer sur tout l'écran avec une souris, à savoir : "Fichier", "Classes", "Actions" et "Zoom".

La commande "Fichier" donne accès aux différentes actions possibles sur les fichiers contenant les graphes de modèles de structure, comme par exemple, ouvrir, fermer, sauvegarder et imprimer.

La commande "Editer" permet de supprimer ou de recopier des objets du graphe présent à l'écran.

La commande "Annotations" permet d'insérer des commentaires sur le graphe présent à l'écran.

La commande "Actions" permet d'accéder aux différentes commandes pouvant être actionnées sur le graphe présent à l'écran, notamment, aux commandes de visualisation, de modification, d'activation des vérifications et contrôles de cohérence.

La commande "Zoom" permet d'agrandir ou de diminuer l'échelle de représentation du graphe à l'écran.

Le formalisme mis en oeuvre pour construire ces modèles de structure a tout d'abord consisté à définir des classes d'objets et des classes de liens nécessaires à cette construction, ainsi que les propriétés de ces objets et de ces liens.

Un modèle de structure, comme par exemple celui de la figure 1, est donc défini à l'aide d'objets appartenant aux classes suivantes, dont la liste est affichée à l'écran dans une fenêtre si l'on actionne la commande "Classes" :
- la classe DOC des objets représentant des modèles de structures d'informations,
- la classe ATTRIBUT contenant les caractéristiques des objets de la classe DOC,
- la classe DISPATCHER des objets représentant les différents types de structures hiérarchiques possibles formées par les objets de la classe DOC, et
- la classe INSTANCE des objets représentant les sous-ensembles d'informations, et chacun symbolisés par une ellipse ("test1"), et
- la classe EXCEPTION des objets représentant les objets de la classe DOC que l'on désire supprimer ou ajouter dans toute l'arborescence issue de l'objet de la classe DOC auquel se trouvent reliés directement les objets de cette classe.

Les objets de la classe DOC, dont le symbole graphique forme, sur la figure 1, un rectangle encadrant le nom de l'objet ("CTABLE","TITLE","COLDEF","CTABHEAD","CTABBODY", ...), représentent les différentes parties composant la structure d'un ensemble d'informations, (par exemple : un titre, des colonnes, des lignes, des champs, ...).

Un objet de cette classe peut présenter les propriétés suivantes :
- "optionnel" qui indique que l'objet est optionnel, un objet optionnel étant repéré sur le graphe par un cercle placé à proximité de l'objet,
- "liste" qui indique que l'objet représente une liste (par exemple, de chapitre ou de paragraphes), dans ce cas, une croix figure sur le graphe à proximité de l'objet, et
- "a-suivre" marquée sur le graphe par une flèche pointant sur l'objet, indiquant que l'arborescence issue de l'objet n'est pas affichée.

Pour accéder aux différentes commandes agissant sur un objet de cette classe, il suffit de désigner l'un de ces objets apparaissant sur le graphe à l'aide de la souris. Cette opération déclenche l'affichage d'une fenêtre dont le titre correspond au nom de l'objet et dans laquelle apparaissent les commandes suivantes qu'il suffit de désigner à l'aide de la souris pour les actionner :
- "générer le code" décrivant la structure de l'objet désigné exprimé en langage informatique,
- "lire une instance" qui a pour effet de lire un fichier contenant la définition d'une structure exprimée en langage informatique, de transcrire cette structure en graphe et de l'associer à l'objet désigné,
- "arranger le graphe" qui a pour effet de replacer tous les objets de l'arborescence issue de l'objet désigné,
- "ordonner les fils" de l'objet désigné s'ils sont numérotés, pour les placer sur le graphe de gauche à droite, en fonction de leurs numéros respectifs,
- "afficher/cacher les fils" de l'objet désigné qui permet d'afficher ou d'effacer l'arborescence issue de l'objet désigné,
- "afficher/cacher les attributs" qui permet d'afficher les attributs de l'objet désigné dans une fenêtre d'où il est possible de les modifier,
- "renommer" qui permet de modifier le nom de l'objet désigné,
- "inspecter" qui permet d'afficher les propriétés de l'objet désigné dans une fenêtre d'où il est possible des les modifier, et
- "lier" qui permet de relier l'objet désigné à un autre objet de la classe DOC appartenant au graphe.

A partir du menu "Editer", il est également possible de supprimer ou de recopier un objet de n'importe quelle classe à l'aide des commandes, "Couper", "Copier", "Coller".

Un objet de la classe ATTRIBUT dont le symbole graphique forme un parallélogramme encadrant le nom de l'attribut "colsep", "rowsep", "rotate", ou "totalcol", représente une caractéristique de l'objet "CTABLE" de la classe DOC auquel il est relié.
Les objets de cette classe permettent de mieux qualifier les objets de la classe DOC et d'associer une valeur particulière aux différentes occurrences de cet objet qui apparaissent dans les ensembles d'informations structurés par le modèle représenté par le graphe.
Un objet de cette classe possède un type et une valeur par défaut.

Un attribut peut avoir l'un des types suivants :
- énuméré, dans ce cas, la liste des valeurs possibles doit être fournie,
- textuel,
- référence à un objet externe à la structure,
- liste de références à des objets externes à la structure,
- identifiant d'un objet de la structure,
- référence à un identifiant d'objet de la structure,
- liste de références à des identifiants d'objets de la structure,
- nom : chaîne de maximum 8 caractères alphabétiques, tirets ou points commençant par une lettre,
- liste de noms,
- chaîne de maximum 8 caractères alphanumériques,
- liste de chaînes de maximum 8 caractères alphanumériques,
- chaîne de maximum 8 caractères alphanumériques commençant par un chiffre,
- listes de chaînes de maximum 8 caractères alphanumériques commençant par un chiffre,
- notation définie dans un fichier,
- nombre de 8 chiffres maximum, et
- liste de nombres de maximum 8 chiffres,

La valeur par défaut d'un attribut doit, bien entendu, être compatible avec le type de l'attribut. Elle peut être :
- à saisir,
- fixée, dans ce cas, il s'agit de la seule valeur possible et cela, pour tous les objets de tous les ensembles d'informations structurés par ce modèle ;
- à spécifier obligatoirement ;
- égale à la dernière valeur spécifiée pour l'attribut correspondant dans l'ensemble d'informations ;
- optionnelle ; et
- égale à la valeur par défaut d'un autre attribut.

La modification d'un objet de cette classe se fait de la même manière que pour un objet de la classe DOC en désignant auparavant, sur le graphe affiché à l'écran, l'attribut que l'on veut modifier.
Les différentes commandes possibles sur un objet de cette classe sont les suivantes :
- "renommer" qui permet de modifier le nom de l'objet désigné, et
- "inspecter" qui permet d'afficher le type et la valeur par défaut de l'attribut désigné, dans une fenêtre d'où il est possible des les modifier.

Les objets de la classe DISPATCHER, chacun symbolisé par un hexagone ("SEQ", "CHO", "AGR"), permettent de représenter les différents types de modèles de structures hiérarchiques possibles. Ils peuvent être de type :
- "SEQ" qui indique une structure de type séquentielle dans laquelle sont ordonnés (dans l'ordre où ils apparaissent sur le graphe) les objets de la classe DOC reliés directement à un objet de type "SEQ",
- "AGR" qui définit un agrégat d'objets de type DOC dans lequel les objets reliés directement à un objet de type "AGR" peuvent apparaître dans n'importe quel ordre dans l'ensemble d'informations structuré par le modèle,
- "CHO" pour définir un ensemble de choix dans lequel un seul des objets de la classe DOC reliés directement à un objet de type "CHO" doit apparaître dans un ensemble d'informations structuré par le modèle,
- "EXCL" pour indiquer que les objets de la classe DOC qui lui sont rattachés doivent être supprimés de toute la descendance de l'objet auquel cet objet est relié, et
- "INCL" pour annuler l'effet de "EXCL" dans toute la descendance de l'objet de la classe DOC auquel il est rattaché.

La construction d'un graphe selon ce formalisme consiste tout d'abord à créer un premier objet de type DOC représentant l'ensemble d'informations. Pour cela, il faut activer la commande "Classes" qui provoque l'affichage à l'écran d'un menu donnant la liste des classes (figure 1). Il faut ensuite sélectionner la classe DOC, ce qui entraîne l'affichage d'un nouveau menu permettant de sélectionner une action possible sur un objet de ce type.
Dans le cas présent, on choisit l'option "créer" qui requiert la saisie d'un nom à attribuer à l'objet que l'on veut créer, c'est-à-dire "CTABLE", ainsi que la définition de ses propriétés.

Une fois cette saisie terminée, un rectangle dans lequel figure le nom saisi, apparait à l'écran. Ce rectangle, qui représente l'objet que l'on vient de créer, peut être déplacé sur l'écran au moyen de la souris.

Pour poursuivre la construction du modèle, il faut répéter la séquence décrite ci-dessus pour créer les objets représentant les différents sous-ensembles et éléments de l'ensemble d'informations.

Comme précédemment mentionné, la construction d'un graphe consiste également à lier les différents objets entre eux de manière à décrire une structure hiérarchique ou non.

Pour créer un lien entre deux objets, l'opérateur désigne tout d'abord l'objet de départ du lien, à l'aide de la souris. Il demande ensuite la création d'un lien en actionnant la commande "Actions" qui provoque l'affichage dans une fenêtre, d'un menu contenant l'opération "lier". Après avoir actionné cette commande puis désigné l'objet de destination, une nouvelle fenêtre s'affiche dans laquelle figure un menu permettant de sélectionner une classe de liens. Ces classes sont les suivantes :
- la classe L-CONSTRUCTION des liens permettant de représenter, avec des objets de la classe DISPATCHER, la structure hiérarchique d'inclusion des objets de la classe DOC,
- la classe L-ATTRIBUTION des liens permettant de relier les objets de la classe ATTRIBUT aux objets de la classe DOC
- la classe L-RECURSIF des liens qui permettent de spécifier une structure récursive en reliant directement ou indirectement un objet à lui-même, et
- la classe L-REFERENCE des liens permettant d'indiquer qu'un objet fait référence à un autre.

Les liens de construction (classes L-CONSTRUCTION et L-RECURSIF) permettent de définir la structure hiérarchique d'un modèle en décrivant la décomposition des objets depuis le plus haut niveau (ensemble d'informations) jusqu'au plus bas niveau. Ils possèdent certaines propriétés qui déterminent notamment :
- le numéro d'ordre dans le cas d'une structure séquentielle ordonnée, affiché sur le graphe à proximité du lien,
- si l'objet destination peut être répété pour définir une structure itérative, cette propriété est matérialisée sur le graphe par une croix à proximité du lien, ou bien
- si l'objet est optionnel, c'est-à-dire s'il peut ne pas apparaître dans un ensemble d'information structuré par le modèle, cette propriété est alors matérialisée par un point à proximité du lien.

Les liens de récursivité (classe L-RECURSIF) sont des liens de construction particuliers car ils permettent de spécifier qu'un objet est lui-même composé d'objets de même structure. Les liens de cette classe doivent cependant être utilisés selon certaines règles afin de ne pas déclencher un processus de boucle infinie. Pour cela, la structure comprenant un lien de cette classe doit comporter au moins une condition d'arrêt, comme par exemple, un élément optionnel qui peut interrompre la boucle si cet élément n'est plus ajouté, ou bien une structure de choix dans laquelle le lien récursif fait partie du choix.

Les liens de la classe L-REFERENCE permettent de relier deux objets pour indiquer que l'objet de départ du lien fait référence à l'objet de destination. Cette particularité permet d'établir systématiquement des liens de référence, respectivement entre tous les ensembles d'informations issus de l'objet de départ, et tous les ensembles issus de l'objet de destination.

Les liens de référence sont associés à une sémantique décrite par un label, par une expression ou par une fonction.
Le label permet d'indiquer la validité du lien. Il permet par exemple, de définir un lien activable uniquement pour un type d'avion donné ou pour une compagnie aérienne donnée.
Une expression désignant par exemple un attribut particulier et sa valeur permet de définir un lien activable uniquement vers les possédant cet attribut ayant cette valeur.
Une fonction permet de décrire une opération de calcul à réaliser entre l'objet de départ et l'objet d'arrivée du lien.

La commande d'un lien de référence provoque la création, au niveau de l'objet référencé, d'un attribut de type "identifiant" d'objet ayant comme valeur par défaut la valeur de l'objet référençant, et au niveau de l'objet reférençant, d'un attribut de type "référence à un objet" ou "liste de références" ayant comme valeur par défaut la référence de l'objet référencé.

Ces liens de référence peuvent être de type génériques. Dans ce cas, ils peuvent être de plusieurs types :
- "noeud-fils", la création d'un tel lien entre un objet A et un objet B, tout deux de la classe DOC entraîne la génération de liens de référence entre l'objet A et les "fils" de l'objet B, les fils d'un objet étant les objets de type DOC reliés directement à cet objet par des liens de construction ;
- "fils-noeud", la création d'un tel lien entre un objet A et un objet B entraîne la génération de liens de référence entre les fils de l'objet A et l'objet B ;
- "fils-fils", la création d'un tel lien entre un objet A et un objet B entraîne la génération de liens de référence entre les fils de l'objet A et les fils l'objet B ; et
- "frère-frère", la création d'un tel lien, partant d'un objet A et revenant sur lui-même, entraîne la génération de liens de référence entre les fils de l'objet A.

Durant la construction d'un graphe de modèle de structure, un certain nombre de contrôles dynamiques sont effectués par le processeur et consistent à n'autoriser que les opérations conduisant à un graphe cohérent.

Ces contrôles portent sur la création des objets et des liens.
En ce qui concerne les objets, il est interdit de créer deux objets de la classe DOC ayant le même nom. Néanmoins, on peut dupliquer dans un graphe le symbole d'un objet particulier, les deux symboles désignant alors le même objet.

La création des liens obéit aux règles suivantes :
- il est interdit de relier un objet à l'un des ses pères par un lien de construction ; cela formerait un cycle, et donc une récursivité ; pour effectuer ce lien, il faut utiliser un lien de la classe L-RECURSIF ;
- il est interdit de relier deux objets "alternatifs" ayant un père commun par un lien de construction, puisqu'un seul de ces deux objets ne devra apparaître dans un ensemble d'informations associé à cette structure ;
- un lien récursif ne peut être crée que s'il ne crée pas une boucle infinie sans condition d'arrêt ;
- en ce qui concerne les liens génériques de type "noeud-fils" ou "fils-noeud", l'objet de destination ou de d'origine du lien soit comporter des fils ; et
- dans le cas des liens génériques de type "fils-fils", il faut que le nombre de fils de chaque objet soit identique, sinon la génération des liens de référence qui en découle s'arrête lorsque tous les fils de l'objet de départ ou de destination sont reliés respectivement à un fils de l'objet de destination ou de départ.

Ces contrôles se déroulent de la manière suivante : par exemple, dans le cas où l'opérateur crée un lien qui forme un cycle, et donc une récursivité, pour définir le type de lien à créer, le terminal va proposer à l'opérateur dans le menu de sélection d'une classe de liens, uniquement les classes L-RECURSIF et L-REFERENCE, et ne propose pas la classe L-CONSTRUCTION qui n'est, dans ce cas, pas autorisée.

Ces contrôles peuvent être désactivés de manière à permettre la génération de structures complexes dont certaines étapes intermédiaires de construction aboutissent à une structure incohérente.

Les commandes possibles sur un graphe de ce type présent à l'écran comme représenté sur la figure 1 sont les suivantes :
- "Démons ON/OFF" qui permet d'activer ou de désactiver les tâches qui effectuent les tests de vérification au fur et à mesure de la construction d'un graphe.
- "Affiche Props" qui permet d'afficher à proximité des liens de la classe L-CONSTRUCTION, les numéros d'ordre associés lorsqu'ils définissent une structure de type séquentielle,
- "Lire une DTD" qui a pour effet de transcrire un modèle de structure logique exprimé en langage informatique en un graphe du type précédemment défini,
- "Affiche/Cache les attributs" qui a pour effet d'afficher ou d'effacer les objets de la classe ATTRIBUT appartenant au graphe,
- "Recherche un objet" qui provoque l'affichage d'une fenêtre permettant de saisir le nom d'un objet à rechercher, si celui-ci existe dans le graphe, il est repéré, par exemple, en étant affiché en vidéo inverse, et
- "Vérifier la construction" qui permet d'activer la vérification de la cohérence du graphe.

La vérification de la cohérence du graphe porte notamment sur les structures de choix utilisant l'objet de type "CHO" qui doit être relié à au moins deux objets de type DOC de niveau hiérarchique immédiatement inférieur.

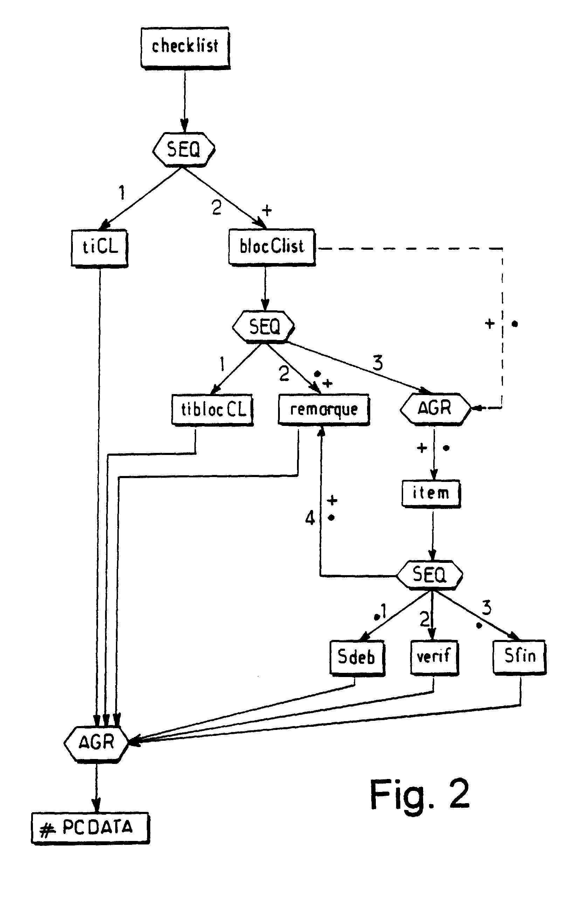

La figure 2 représente le graphe du modèle de structure de l'ensemble des informations permettant de constituer les listes de tâches à effectuer lors de chaque phase de vol d'un aérodyne.

Cet ensemble d'informations représenté par un objet de la classe DOC nommé "checklist", possède au premier niveau, une structure séquentielle ordonnée "SEQ" dont les liens sont numérotés de 1 à 2. Cette structure se compose tout d'abord de l'objet de la classe DOC nommé "tiCL" (premier lien) représentant le titre de l'ensemble d'informations, puis d'un objet intitulé "blocClist" (second lien) de type "liste" (une croix figure à côté du lien 2 vers l'objet). Cet objet représente une liste de blocs appartenant à cet ensemble.

L'objet "tiCL" est constitué par un objet intitulé "#PCDATA", non décomposable et représentant du texte.

Chaque élément de la liste "blocClist" possède une structure séquentielle ordonnée "SEQ" comprenant successivement les trois éléments suivants :
- un premier élément intitulé "tiblocCL" représentant le titre du bloc,
- un second élément intitulé "remarque", optionnel et de type liste (repéré par un point et une croix à proximité du lien), et
- un troisième élément possédant une structure d'agrégat "AGR" composée de deux objets optionnels de type liste intitulés "item" et "blocClist".

A ce propos, il faut noter que le lien entre l'objet "AGR" et l'objet "blocClist" (représenté en traits interrompus) appartient à la classe L-RECURSIF car il relie indirectement l'objet "blocClist" à lui-même. Ce lien indique que l'objet "blocClist" peut être lui-même constitué d'objets de même structure.

A l'instar de l'objet "tiCL", les objets "tiblocCL" et "remarque" sont constitués par des objets non décomposables "#PCDATA" représentant du texte.

Quant à l'objet "item", il possède une structure séquentielle ordonnée "SEQ" composée successivement des quatre objets suivants, qui eux-mêmes sont constitués par des objets non décomposables représentant du texte :
- "Sdeb" optionnel,
- "verif",
- "Sfin" optionnel, et
- "remarque" optionnel et de type liste.

Dans cette structure, on peut remarquer que les objets "blocClist" et "item" peuvent comprendre l'objet "remarque" ayant la propriété "liste" et "optionnel".

Cela signifie simplement que les sous-ensembles d'informations de structure "blocClist" et "item" constituant l'ensemble de structure "checklist", peuvent comprendre une liste de remarques.

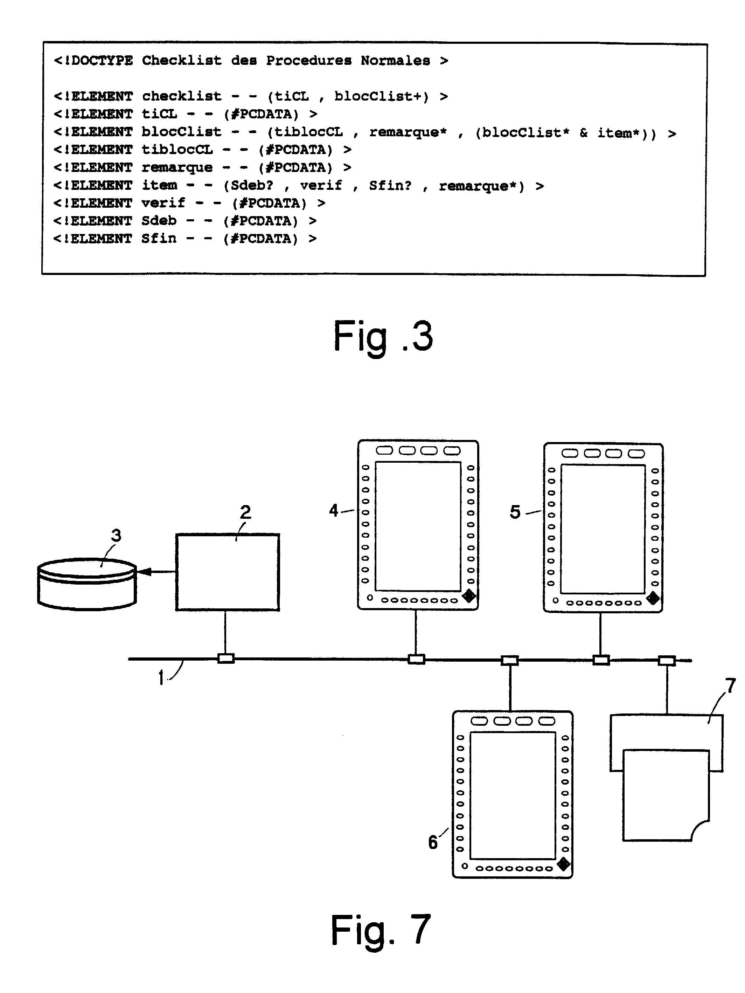

La figure 3 montre la traduction en code SGML (langage de marquage standard généralisé) du graphe représenté sur la figure 2. Chaque ligne de cette traduction permet de définir le nom (à la suite du mot clé "!ELEMENT") de chaque objet de la classe DOC représenté sur la figure 2 et de définir les fils de chaque objet (indiqués entre parenthèses). Le type de chaque fils est indiqué après le nom de chaque fils :
- "+" indiquant une liste,
- "?" indiquant le caractère optionnel, et
- "∗" indiquant une liste à caractère optionnel.

Les fils formant une séquence sont délimités par une virgule, tandis que ceux qui forment un agrégat sont délimités par le caractère "&".

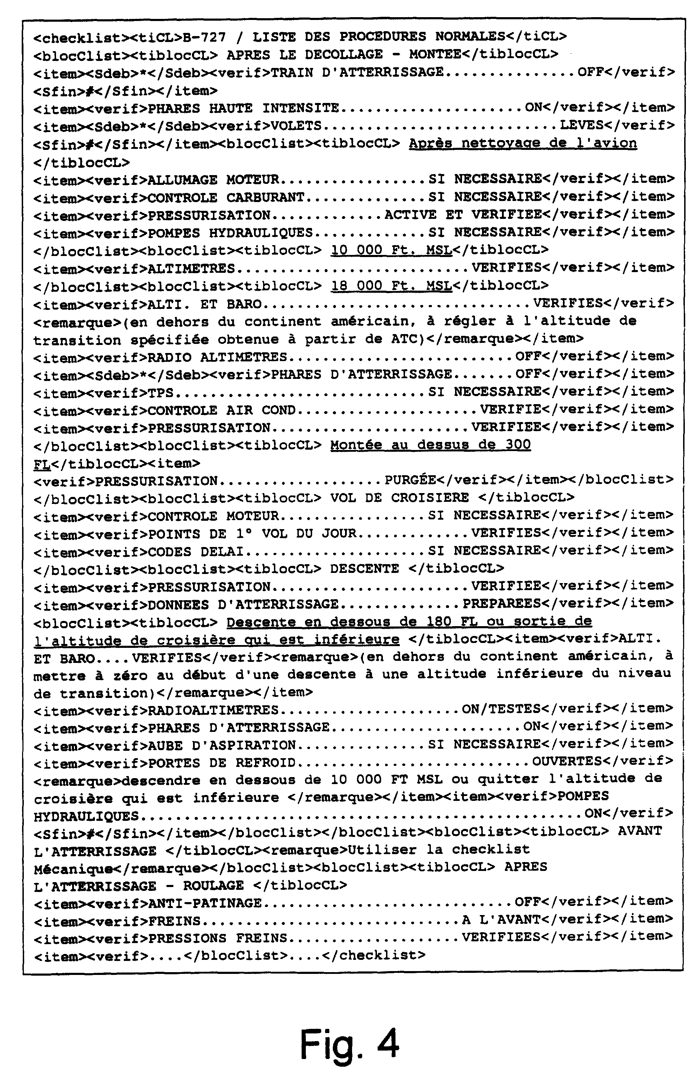

Sur la figure 4, les noms des objets de type DOC précédemment définis pour décrire la structure "checklist" servent de mots clés pour délimiter des champs composant l'ensemble d'informations structuré par ce modèle. Le début et la fin d'un champ sont ainsi repérés par le mot clé entre crochets, par exemple, "<blocClist>" qui en marque début et </blocClist>" la fin.

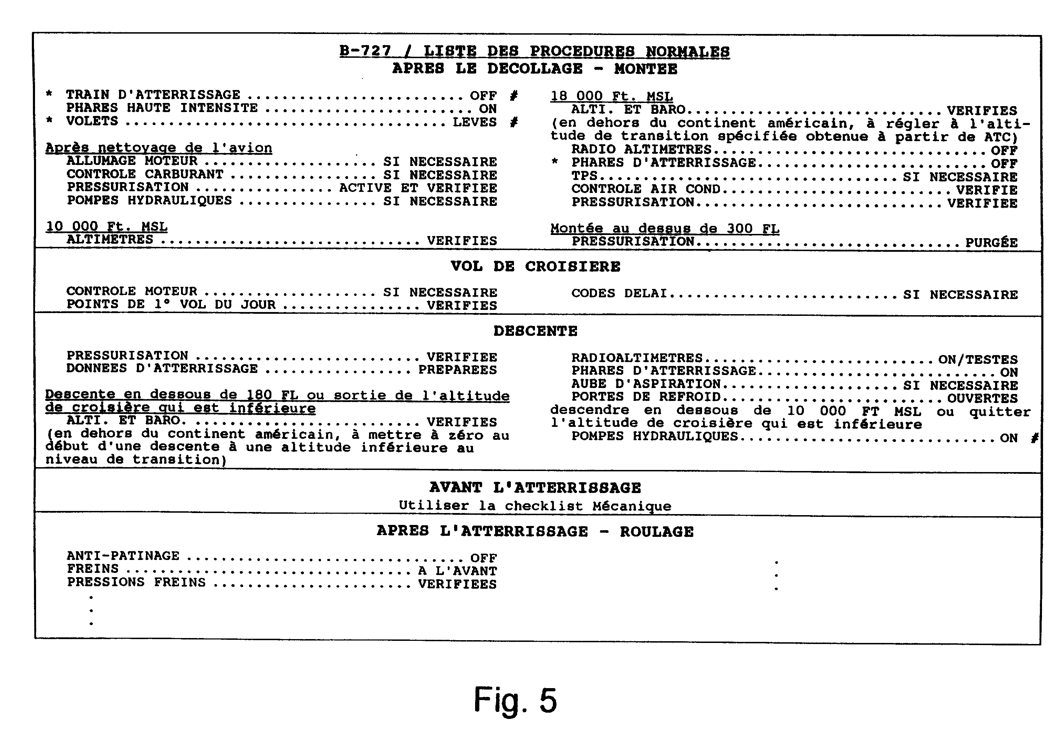

Grâce à ce procédé, il est possible, par exemple, de définir une présentation de cet ensemble d'informations uniquement à partir du modèle de structure et indépendamment de son contenu. Ainsi, les informations structurées selon le modèle représenté sur la figure 2 peuvent être présentées de la manière suivante (figure 5) : le titre de l'ensemble d'informations référencé par "tiCL" est indiqué en grosses lettres en haut de chaque page "B-727 LISTE DES PROCEDURES NORMALES". Ensuite, figure le titre "tiblocCL" de chaque bloc de structure "blocClist" suivie d'une liste d'items présentés sur deux colonnes éventuellement associés à des remarques.
Ainsi, par exemple, le premier sous-ensemble de type "blocClist" est intitulé "APRES LE DECOLLAGE - MONTEE". Il inclue trois items (ou sous-ensembles de structure "item") dont le champ "verif" est renseigné, ainsi que les champs "Sdeb et Sfin des premiers et troisièmes items qui correspondent respectivement aux caractères "∗" et "#" :
∗ TRAIN D'ATTERRISSAGE....................... OFF #
   PHARES HAUTE INTENSITE...................... ON
∗ VOLETS................................... LEVES #
et quatre sous-ensembles de type "blocClist" incluant chacun des sous-ensembles de type "item" et dont les titres respectifs figurent en caractères soulignés :
Après nettoyage de l'avion
10 000 Ft. MSL
18 000 Ft. MSL
Montée au dessus de 300 FL.

D'autres classes d'objets ont été ajoutées à celles précédemment décrites pour pouvoir, d'une part, représenter les structures d'ensembles d'informations qui découlent de ces modèles de structures, et d'autre part, établir des liens de référence entre ensembles d'informations particuliers et non entre modèles de structure.

Ainsi, la classe INSTANCE regroupe les objets qui définissent de manière précise la structure d'un ensemble d'informations donné. Ainsi, un objet de cette classe représente une structure dans laquelle tous les éléments impliquant un choix ont été précisés.

Ces objets peuvent être reliés à l'objet de la classe DOC dont ils dérivent à l'aide d'un lien de la classe L-INSTANCE (voir l'objet "test1 représenté" sur la figure 1).

Ils peuvent être représentés à l'aide d'un graphe dit instance, dans lequel il n'y a plus d'objets de la classe DISPATCHER, ni d'objets de la classe DOC de type "liste" ou "optionnels", ni de liens de la classe L-RECURSIF, ces derniers étant développés en autant de liens de construction que le nombre de cycles existant dans l'ensemble d'informations.

Par ailleurs, dans un tel graphe, les objets de la classe DOC sont devenus des objets de la classe DOC-FINAL, chacun étant associé à une partie d'un ensemble d'informations particulier. La classe DOC-FINAL regroupe donc les objets de la classe DOC, une fois qu'ils ont été appliqués à un ensemble d'informations donné.

La classe ATTRIBUT est également remplacée par la classe ATTRIBUT-FINAL qui regroupe les attributs des objets de la classe DOC-FINAL dont la valeur est clairement définie.

Les actions possibles sur un graphe instance sont les suivantes :
- voir les objets supprimables, les objets de la classe DOC-FINAL pouvant posséder cette propriété,
- arranger le graphe pour replacer les différents objets composant le graphe d'une manière plus lisible,
- affiche/cache les attributs des objets de la classe DOC-FINAL,
- recherche un objet à partir de son nom, et
- "demons ON/OFF" pour activer ou désactiver les tâches de vérification de la cohérence du graphe au fur et à mesure de sa modification.

Les actions possibles sur un objet de la classe DOC-FINAL que l'on a auparavant désigné à l'aide de la souris sont les suivantes :
- affiche/cache les attributs de l'objet désigné,
- affiche/cache les fils de l'objet désigné,
- ordonne les fils de l'objet désigné lorsqu'ils font partie d'une séquence pour les ranger de gauche à droite dans un ordre croissant, et
- visualise pour afficher le texte que représente l'objet désigné.

Ces objets possèdent les propriétés suivantes :
- supprimable indique si l'objet peut être supprimé de l'ensemble d'informations,
- type indique le type d'informations représentées par l'objet (texte, graphique, image, ...),
- fichier indique le nom du fichier où se trouvent les informations représentées par l'objet,
- début donne la position du début de ces informations relativement au fichier où elles se trouvent,
- fin donne la position de la fin de ces informations relativement au fichier,
- instance donne le numéro d'identification de l'objet de la classe DOC définissant le modèle de structure de cet objet, et
- nom du modèle donne le nom de cet objet de la classe DOC.

Les attributs d'un objet de la classe DOC-FINAL possèdent chacun une valeur finale égale aux informations qu'il représente, en plus des valeurs issues de l'attribut correspondant du modèle de structure. En autres termes, chaque objet d'un graphe instance qui décrit la structure d'un ensemble d'informations, correspond à un champ (ou une partie) de ce dernier.

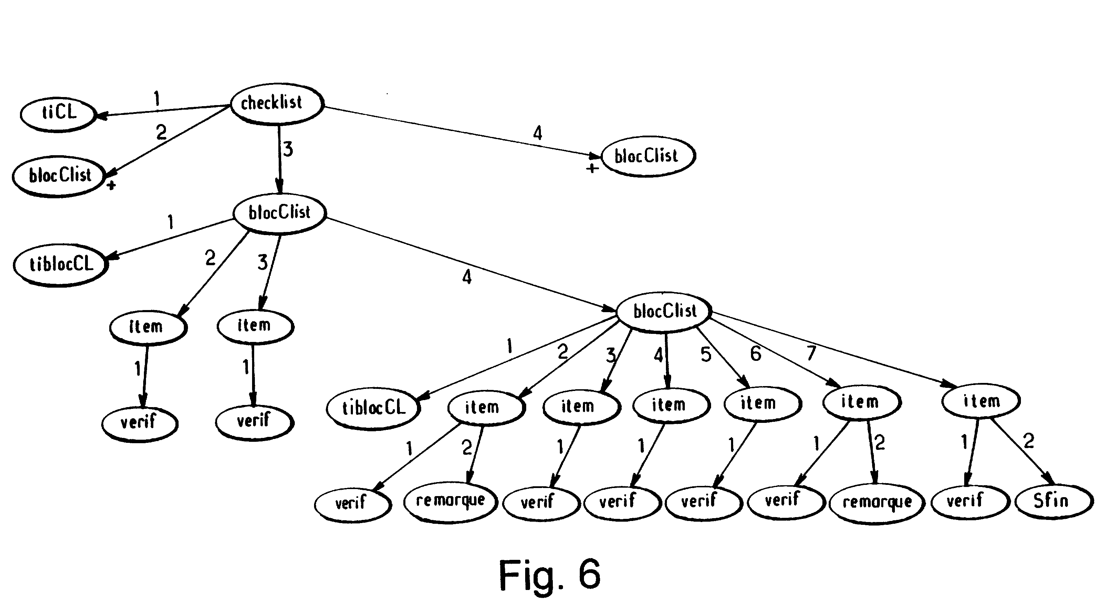

Ainsi, lorsque l'on applique le graphe de la figure 2 au contenu des listes présenté sur la figure 5, on obtient le graphe instance représenté sur la figure 6 qui montre la structure propre à chaque liste qui découle du modèle de structure défini par le graphe de la figure 2.

Pour des raisons matérielles, on n'a développé sur cette figure que le bloc intitulé "DESCENTE" de la liste "B-727 / LISTE DES PROCEDURES NORMALES".
Cette figure représente sous la forme d'ellipses tous les objets de la classe DOC-FINAL issus des objets de la classe DOC qui apparaissent dans la liste "B-727 / LISTE DES PROCEDURES NORMALES" donnée sur la figure 5.

On peut remarquer que tous les objets de la classe DISPATCHER ont disparus, les objets de la classe DOC de type "liste" ont été remplacés en autant d'objets de la classe INSTANCE qu'il y a de sous-ensembles correspondants dans l'ensemble d'informations ainsi représenté. En outre, le lien de la classe L-RECURSIF à été décomposé en autant de liens de construction qu'il y a de sous-ensembles de structure "blocClist" inclus les uns dans les autres. D'autre part, les objets optionnels n'apparaissent que lorsqu'ils ont une correspondance au niveau de l'ensemble d'information.

Ainsi, en lisant en correspondance les figures 5 et 6, l'objet "checklist" correspond à la liste des procédures normales. Il est composé d'un titre "tiCL" dont la valeur est "B-727 / LISTE DES PROCEDURES NORMALES", d'un ensemble d'objets de type "blocClist" (non développés sur la figure), puis d'un objet développé de type "blocClist", et d'un autre ensemble d'objets de type "blocClist".

L'objet développé de type "blocClist" comprend successivement un premier objet de type "tiblocCL" dont la valeur est "DESCENTE", deux objets de type "item" comprenant chacun un champ de type "verif" ayant respectivement pour valeur :
PRESSURISATION ACTIVE ET VERIFIEE
et
DONNEES D'ATTERRISSAGE PREPAREES
et un autre objet de type "blocClist" correspondant à une sous-liste.

Comme les autres objets de ce type, cette sous-liste se décompose en un objet de type "tiblocCL" correspondant à son titre, dans cet exemple "Descente en dessous de 180 FL ou sortie de l'altitude de croisière qui est inférieure". Cette sous-liste comprend, dans un ordre déterminé, six objets de type "item", comprenant chacun un objet de type "verif", qui comme précédemment, indique un organe de l'aérodyne et la tâche à effectuer sur cet organe.
En outre, le premier et le cinquième objet de type "item" comprennent chacun également un objet de type "remarque" dont la valeur respective est :
"(en dehors du continent américain, remettre à zéro lors du début d'une descente à une altitude inférieure au niveau de transition)", et
"descendre en dessous de 10 000 Ft MSL ou quitter l'altitude de croisière qui est inférieure".

D'autre part, le sixième objet de type "item" comprend, en plus du champ de type "verif", un champ de type "Sfin" valant "#".

Un tel graphe permet notamment d'établir des liens de référence entre les différents objets qu'il contient ou avec d'autres objets de même type définis dans d'autres graphes.

Pour établir des liens de référence entre objets de deux graphes instance, il suffit, tout d'abord, de commander l'édition des deux graphes qui apparaissent alors à l'écran dans deux fenêtres différentes. Il faut ensuite désigner l'objet départ du lien dans une fenêtre, de commander l'opération "lier" dans le menu "actions", et de désigner l'objet destination du lien dans l'autre fenêtre.

Les structures définies selon le procédé sont ensuite utilisées par un dispositif d'exploitation des informations ainsi structurées.

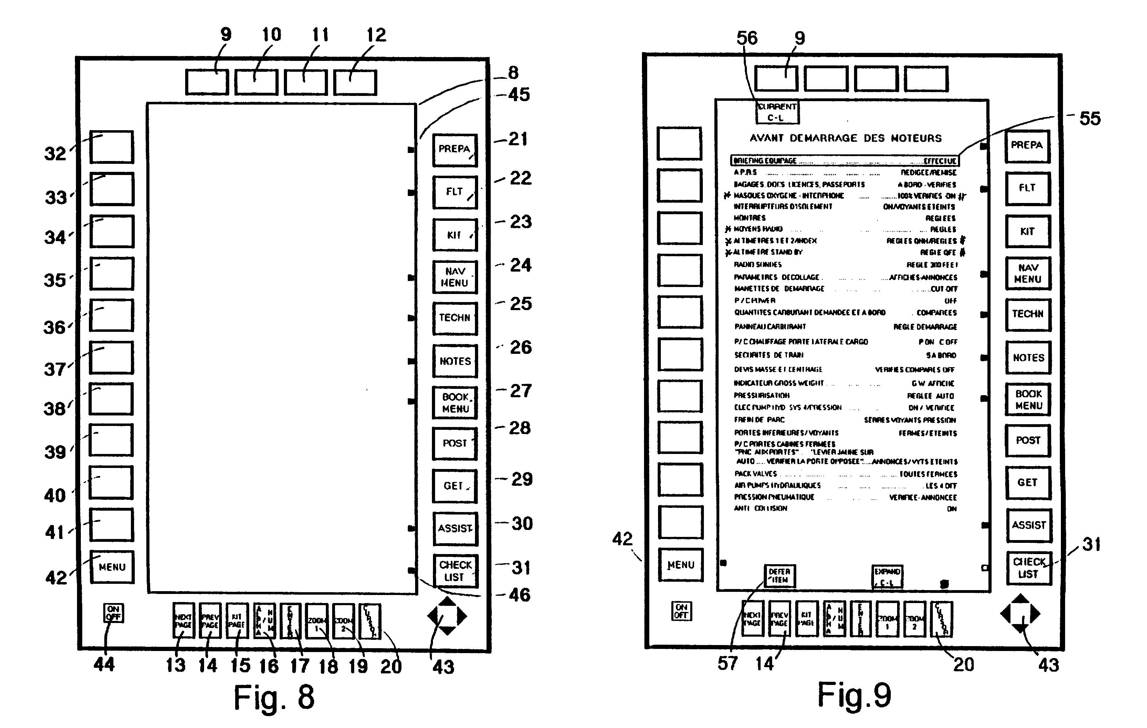

Le schéma représenté sur la figure 7 montre un exemple d'architecture d'un système destiné à être embarqué à bord d'un avion de ligne, réalisant l'application du procédé selon l'invention à l'assistance au pilotage.

Ce système est constitué d'un réseau local 1 sur lequel sont connectés :
- une unité centrale 2 gérant les accès au réseau local et à une mémoire de masse 3 qui peut être constituée de plusieurs unités de type disque magnétique, optique ou magnéto-optique dans lesquelles se trouvent stockés notamment les listes de tâches et leurs structures,
- des terminaux de communication 4,5,6 adaptés à une utilisation à bord d'un avion de ligne, et en particulier dans le poste de pilotage où l'espace disponible est relativement réduit, et
- une imprimante 7.

Il peut être raccordé aux bus de l'avion pour acquérir en temps réel des données élaborées par les autres systèmes électroniques embarqués à bord.

Un terminal embarqué est représenté sur la figure 8. Il est constitué d'un écran de visualisation 8 rectangulaire autour duquel sont réparties des touches, à savoir :
- quatre touches 9 à 12 alignées le long du bord supérieur de l'écran 8,
- huit touches 13 à 20 alignées le long du bord inférieur de l'écran 8,
- onze touches 20 à 31 et 32 à 42 respectivement alignées le long des bords droit et gauche de l'écran 8,
- une touche de déplacement 43, située dans le coin inférieur droit du terminal, et représentant quatre flèches pour déplacer un curseur ou l'image présente à l'écran dans les quatre sens, et
- une touche 44 située dans le coin inférieur gauche, intitulée "ON/OFF" pour mettre le terminal sous ou hors tension.

Certaines touches ont une fonction prédéterminée, et dans ce cas, l'intitulé de la fonction figure sur la touche.
Toutefois, ces touches peuvent être reconfigurées en fonction de la page affichée à l'écran, soit pour activer d'autres fonctions, soit pour saisir des chaînes de caractères. Dans ce cas, le nom de la fonction affectée à chaque touche ou le caractère correspondant est indiqué sur l'écran, à proximité de la touche.

Chaque touche peut prendre deux ou trois états :
- un état inactivable lorsque la touche n'est affectée à aucune fonction,
- un état activable lorsque la touche permet d'activer une fonction, et
- un état actif lorsque la fonction prédéterminée associée à la touche est en cours d'exécution.

A proximité de chacune des touches ayant une fonction prédéterminée, se trouve un indicateur d'état 45,46 (représenté par un carré sur les figures), qui, lorsqu'il est allumé, indique que la touche est active (en blanc sur les figures) ou activable (en noir), selon la couleur de l'indicateur allumé et qui, lorsqu'il est éteint (invisible sur les figures), indique que la touche est inactivable.

Les touches qui ne sont pas affectées à une fonction prédéterminée, peuvent être, soit activables si un intitulé de fonction figure sur l'écran à proximité de la touche, soit, inactivables dans le cas contraire.

Les touches de la colonne de droite 21 à 31, intitulées "PREPA" 21, "FLT" 22, "KIT" 23, "NAV MENU" 24, "TECHN" 35, "NOTES" 26, "BOOK MENU" 27, "POST" 28, "GET" 29, "ASSIST" 30 et "CHECK LIST" 31 sont affectées aux fonctions principales du terminal, comme par exemple, "PREPA" 21 pour la préparation de vol ou "CHECK LIST" 31 pour l'assistance au pilotage.

Les touches 32 à 41 de la colonne de gauche permettent, en général, de procéder à des sélections lorsque des menus sont affichés à l'écran.
La dernière touche de la colonne de gauche intitulée "MENU" 42 permet d'afficher le dernier menu qui a permis d'accéder à la page courante. Cette touche peut être activée plusieurs fois de suite. Dans ce cas, les différents menus enchaînés pour accéder à la page courante sont successivement affichés jusqu'au premier menu de la fonction principale correspondante.

Les touches 13 à 20 de la rangée en dessous de l'écran permettent d'activer des fonctions liées à la gestion du terminal, à savoir en partant de la droite :
- "NEXT PAGE" 13 qui provoque l'affichage de la page suivante,
- "PREV. PAGE" 14 qui provoque l'affichage la page précédente,
- "KIT PAGE" 15 qui active la mémorisation de la page affichée à l'écran dans une mémoire particulière,
- "ALPHA/NUM" 16 qui permet de passer d'un mode de saisie alphabétique à un mode de saisie numérique et réciproquement,
- "ENTER" 17 pour valider un choix ou une saisie,
- "ZOOM 1" 18 et "ZOOM 2" 19 qui permettent d'agrandir la page présente à l'écran selon respectivement, deux facteurs d'échelle et réciproquement, et
- "CURSOR" 20 qui permet d'afficher un curseur.

Les 4 touches 9 à 12 situées au dessus de l'écran indiquent les noms des 4 derniers choix effectués par l'opérateur. Contrairement à la touche "MENU" 42, ces choix peuvent correspondre à des fonctions principales différentes.

Pour activer la fonction d'assistance au pilotage, il suffit de presser la touche "CHECK LIST" 31 qui est active ou activable en permanence suivant la couleur de son indicateur d'état 46 qui lui est associé (par exemple, sur l'écran de la figure 8).

Le terminal transmet l'ordre d'activation de la fonction "CHECK LIST" à l'unité centrale 2 qui recherche dans la mémoire de masse 3 la structure de l'ensemble d'informations "checklist" dont la structure est représentée figure 6. L'unité centrale 2 exploite cette structure pour rechercher dans la mémoire de masse 3 les informations correspondantes, et transmet au terminal les informations concernant la première liste à traiter selon le format comme représenté figures 3 et 4.

Le terminal exploite alors la structure et les informations qui lui sont transmises, et en particulier la structure de l'objet "blocClist", pour les afficher sur son écran selon une présentation déterminée (figure 9).

Ainsi, la première liste affichée est intitulée "AVANT DEMARRAGE DES MOTEURS" et elle correspond aux tâches à effectuer avant le démarrage des moteurs.

L'indicateur 46 associé à la touche "CHECK LIST" 31 est devenu actif (représenté par un carré blanc), indiquant que la fonction associée en cours de traitement.

La touche "ZOOM 1" 18 est reconfigurée en "EXPAND C-L" 53 et permet d'afficher sur une autre page, les commentaires associés à la liste en cours.

La touche "CURSOR" 20 a permis de faire apparaître un marqueur de sur la première tâche de la liste affichée. Le déplacement de ce marqueur sur les différentes tâches de la liste, est ensuite commandé à l'aide de la touche 43, seule la commande déplacement vers le bas étant activable.

Grâce à la structure d'informations qui lui a été transmise, et en particulier de la structure de l'objet "blocClist" décomposé en éléments de structure "item", le terminal est capable de délimiter chaque tâche de la liste de structure "item" et de les enchaîner pour afficher et déplacer le marqueur.

Pour exécuter une liste de tâches, l'opérateur doit commander le déplacement du marqueur à l'aide de la touche 43 lorsque la tâche désignée par le curseur est achevée, ce qui a pour effet de valider cette tâche et de positionner le curseur sur la tâche suivante. C'est le seul mouvement autorisé pour le curseur.

L'opérateur a la possibilité d'afficher et de déplacer un curseur sur l'écran. Pour cela, il doit tout d'abord actionner la touche "CURSOR" 20 pour afficher le curseur. Cette action a pour effet d'interrompre le traitement de la liste de tâche en cours et d'affecter la touche de 43 au déplacement du curseur.
Si, maintenant l'opérateur positionne le curseur sur l'un des champs composant la structure de la liste de tâches ("tiCL", "tiblocCL", "remarque", "Sdeb", "verif", "Sfin"), et actionne la touche "ENTER" 17, un commentaire associé au champ ainsi désigné apparait à l'écran dans une fenêtre en surimpression. Si dans cet état, il actionne à nouveau la touche "ENTER 17, l'écran reprend son aspect (comme représenté figure 9) et le traitement de la liste de tâches peut être poursuivi.

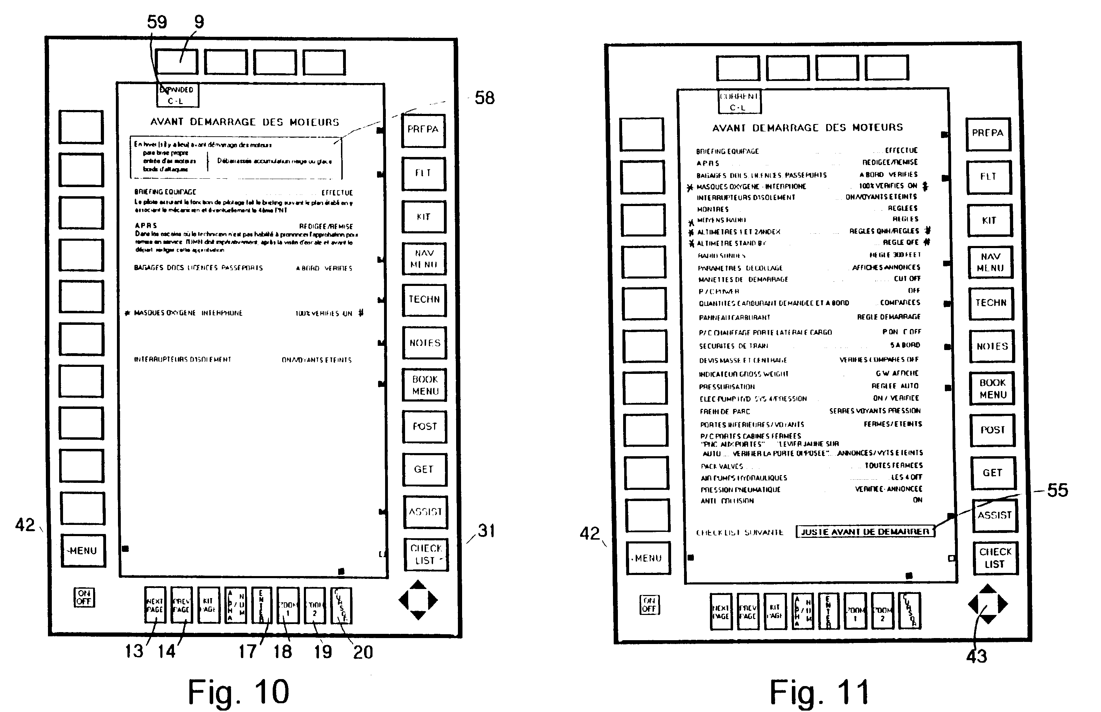

Si l'opérateur presse la touche "ZOOM 1" 18 qui a été reconfigurée en "EXPAND C-L" 53, l'écran représenté sur la figure 10 est affiché.

Sur cet écran apparait le début de la liste précédemment affichée (sur la figure 9) "AVANT DEMARRAGE DES MOTEURS", mais cette fois-ci, son titre et ses libellés de tâches sont chacun associés à un commentaire concernant tout d'abord, la liste en général, puis chaque tâche de la liste.

Au cours de cette opération, ou celle précédemment décrite consistant à désigner un champ à l'aide d'un curseur, le terminal a transmis à l'unité centrale 2 l'ordre de rechercher les commentaires de la liste en cours. L'unité centrale 2 a alors recherché les commentaires associés à chaque champ de la liste en cours, à l'aide des liens de référence reliant les objets du graphe instance de la liste en cours aux objets du graphe instance de l'ensemble d'informations contenant ces commentaires. Ces informations ont ensuite été transmises au terminal pour les afficher à l'écran.

A partir de l'écran représenté sur la figure 10, l'opérateur a accès à l'ensemble des commentaires associés à cette liste, grâce aux touches "NEXT PAGE" 13 et "PREV. PAGE" 14 qui permettent respectivement d'afficher les pages suivantes et précédentes. Si la première page des commentaires de la liste est affichée, seule la touche "NEXT PAGE" 13 est activable.

Il a également la possibilité d'agrandir une partie de l'écran à l'aide des touches "ZOOM 1" 18 et "ZOOM 2" 19 devenues activables.
La touche "ENTER" 17, activable, permet de revenir à l'écran précédent (figure 9).
La première touche 9 de la rangée supérieure est devenue "EXPANDED C-L" 59, indiquant que la page affichée est une liste de tâches commentée.

La figure 11 montre la même liste, le marqueur 55 étant positionné sur le titre de la liste de tâches suivante "JUSTE AVANT DE DEMARRER".
Le traitement de la liste en cours est alors terminé.

Pour aboutir à ce résultat, l'opérateur a validé successivement toutes les tâches de la liste à l'aide de la touche 43, après les avoir exécutées. A chaque activation de la touche 43, le terminal a déplacé le marqueur 55 sur la tâche suivante en exploitant la structure de l'objet "blocClist" pour repérer successivement tous les objets "item" qui le composent, dans l'ordre de la séquence indiquée par cette structure.

Une telle gestion du marqueur 55 permet de garantir que toutes les tâches présentées dans une liste ont été exécutées.

La validation de la dernière tâche de la liste a conduit le terminal à demander à l'unité centrale 2, les informations concernant la liste suivante. Pour fournir ces informations, l'unité centrale exploite la structure de l'objet "checklist", qui est décomposée en objets de structure "blocClist" (figure 6), pour déterminer dans la liste de tâches suivante.
Une fois qu'il a reçu les informations demandées, le terminal a affiché le titre de la liste suivante entourée du marqueur 55 (figure 11).

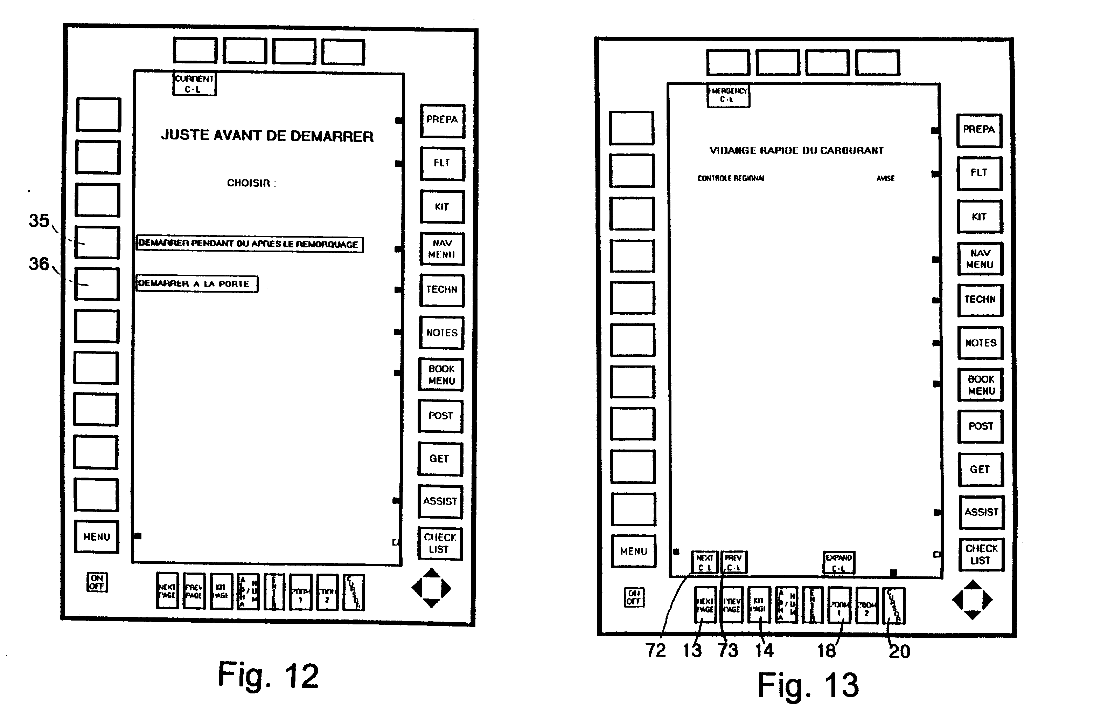

Si, à partir de l'écran représenté sur la figure 11, l'opérateur actionne à nouveau la touche de déplacement 43, l'écran représenté sur la figure 12 apparait à l'écran.

Le terminal a détecté, dans la structure qu'il a reçu de l'unité centrale 2, deux objets "blocClist" composant l'objet de même type correspondant à la liste de tâches "JUSTE AVANT DE DEMARRER". C'est pourquoi il a affiché les titres de ces objets respectivement intitulées "DEMARRER PENDANT OU APRES LE REMORQUAGE" et "DEMARRER A LA PORTE" en demandant à l'opérateur de sélectionner l'une de ces sous-listes. A cet effet, les touches 35 et 36 ont été configurées de manière à permettre cette sélection.

Si une panne est détectée et transmise à l'unité centrale 2 par l'intermédiaire du réseau local 1, l'unité centrale 2 détermine la liste de tâches à exécuter pour traiter cette panne. Pour cela, des liens de référence ont été définis entre les origines de pannes et les listes de tâches permettant de les traiter.
La liste de tâches référencée par l'origine de la panne et sa structure sont alors transmises au terminal qui va interrompre la liste de tâches en cours d'exécution pour afficher la nouvelle liste à traiter.

Le traitement de la liste de tâches "VIDANGE RAPIDE DU CARBURANT" est ainsi lancé (figure 13) si la panne qui est survenue requiert la vidange du carburant.

## Revendications

1. Procédé de structuration d'un ensemble d'informations utilisées dans un processus industriel, mettant en oeuvre un terminal (4,5,6) comprenant un processeur (2), un écran (8) et un clavier (9 à 44) donnant accès à des commandes qui permettent d'introduire et de représenter à l'écran des symboles graphiques et leurs caractéristiques, en vue d'élaborer un graphe (figure 2) représentant un modèle de structure d'informations, ce graphe faisant intervenir au moins des symboles d'un premier type représentant des noeuds, et des symboles d'un second type établissant des liens entre les noeuds,
le procédé comprenant les phases successives suivantes :
- la décomposition de proche en proche de l'ensemble d'informations en sous-ensembles et l'identification de la structure de chacun de ces derniers ;
- le regroupement par structures analogues des sous-ensembles en objets ;
- la détermination de caractéristiques propres à chaque objet ;
- l'introduction dans le terminal de commandes assurant l'affichage de chaque objet, sous la forme d'un symbole de type noeud ("CTABLE","TITLE", "COLDEF","CTABHEAD","CTABBODY"), et de ses caractéristiques ("colsep","rowsep","totalcol");
- l'introduction dans le terminal de symboles de type lien de construction entre les objets, en précisant leurs types et leurs caractéristiques, ces liens indiquant une relation hiérarchique d'inclusion entre deux objets ;
- l'élaboration par le processeur, à partir du graphe introduit dans le terminal, du modèle de structure (figure 3) de l'ensemble d'informations exprimé dans un langage informatique approprié, et
- le contrôle par le processeur de la cohérence du modèle.

2. Procédé selon la revendication 1,
caractérisé en ce qu'il comprend l'introduction, dans le terminal, de symboles de type lien de référence, chacun reliant deux objets pour indiquer que les ensembles d'informations correspondants font référence l'un à l'autre.

3. Procédé selon l'une des revendications précédentes,
caractérisé en ce qu'une liste de sous-ensembles de structures analogues est représentée par un seul objet ("COLDEF") dans un modèle de structure.

4. Procédé selon l'une des revendications précédentes,
caractérisé en ce qu'un sous sous-ensemble qui n'apparait pas systématiquement dans tous les ensembles d'informations structurés par le même modèle, est représenté par un objet optionnel ("TITLE") dans le modèle de structure.

5. Procédé selon l'une des revendications précédentes,
caractérisé en ce qu'un premier objet d'un modèle de structure peut être lié hiérarchiquement par des liens de construction à plusieurs seconds objets de manière à former des structures de types suivants :
- "alternatif" ("CHO") dans laquelle un seul des seconds objets doit apparaître dans chaque ensemble d'informations structuré par ce modèle ;
- "séquence" ("SEQ") dans laquelle les seconds objets apparaissent toujours dans un ordre indiqué sur le graphe dans tous les ensembles d'informations structurés par ce modèle ; et
- "agrégat" ("AGR") dans laquelle les seconds objets apparaissent dans un ordre quelconque dans les ensembles d'informations structurés par ce modèle ;
ces types pouvant se combiner d'une manière quelconque.

6. Procédé selon l'une des revendications précédentes,
caractérisé en ce que les caractéristiques d'un objet comprennent un type et une valeur par défaut compatible avec le type.

7. Procédé selon l'une des revendications précédentes,
caractérisé en ce qu'il comprend l'introduction dans le terminal de symboles de type lien de récursivité reliant un objet à lui-même pour indiquer que la structure de l'objet ("blocClist") est elle-même composée des mêmes objets.

8. Procédé selon l'une des revendications précédentes,
caractérisé en ce qu'il comprend le contrôle par le processeur de la validité de chaque commande introduite dans le terminal.

9. Procédé selon l'une des revendications précédentes,
caractérisé en ce qu'il comprend la conversion d'un modèle de structure exprimé en langage informatique, en un graphe établi conformément au procédé.

10. Procédé selon l'une des revendications 2 à 9,
caractérisé en ce qu'un lien de référence reliant un premier à un second objet peut avoir l'un des types suivants :
- "noeud-fils" indiquant qu'il établit un lien de référence entre le premier objet et tous les objets directement inclus dans le second objet,
- "fils-noeud" pour indiquer qu'il établit un lien de référence entre tous les objets directement inclus dans le premier objet et le second objet,
- "fils-fils" pour indiquer qu'il établit un lien de référence entre tous les objets directement inclus dans le premier objet et tous les objets directement inclus dans le second objet, et
- "frère-frère" reliant un premier objet à lui-même pour établir des liens de référence entre tous les objets directement inclus dans le premier objet.

11. Procédé selon l'une des revendications précédentes,
caractérisé en ce qu'il comprend la construction d'un graphe dit instance (figure 6) comprenant des noeuds et des liens de construction et de référence entre les noeuds, ledit graphe étant obtenu par application d'un modèle de structure à un ensemble d'informations donné, chacun de ses noeuds correspondant à un sous-ensemble particulier de l'ensemble d'information, chacun de ses liens de construction établissant une relation d'inclusion entre deux sous-ensembles, et chacun de ses liens de référence permettant au sous-ensemble de départ du lien de faire référence au sous-ensemble de destination.

12. Application du procédé, selon l'une des revendications précédentes, à l'assistance au pilotage d'un véhicule,
caractérisé en ce qu'elle fait intervenir un ensemble comprenant une pluralité de listes de tâches qui définissent les actions et vérifications à accomplir au cours de chaque phase de pilotage, cet ensemble étant stocké dans la mémoire (3) d'un calculateur (2) à base de processeurs embarqué à bord du véhicule, et qui comprend au moins un terminal de communication homme/machine (4,5,6), ladite application comprenant :
- l'enchaînement automatique sur ledit terminal embarqué du traitement des listes de tâches, à l'aide de l'objet ("checklist") définissant la structure de l'ensemble des listes de tâches, dont le découpage en objets ("blocClist") qui représentent chacun la structure d'une liste de tâches, définit l'ordre d'enchaînement des listes ;
- l'enchaînement automatique sur ledit terminal embarqué, de l'exécution des tâches de la liste en cours de traitement, grâce à l'objet ("blocClist"), qui définit la structure de ladite liste, et dont le découpage en objets ("item") qui représentent la structure desdites tâches, définit leur ordre d'enchaînement.

13. Application selon la revendication 12,
caractérisé en ce qu'elle comprend le déclenchement automatique sur ledit terminal de l'exécution de la liste de tâches appropriée lorsqu'une panne survient, à l'aide des objets identifiant les pannes, des objets ("blocClist") définissant la structure de listes de tâches qui permettent de traiter les pannes, et des liens de référence établis entre ces objets.

14. Application selon l'une des revendication 12 et 13,
caractérisé en ce qu'elle comprend la visualisation sur l'écran dudit terminal de commentaires concernant la tâche et la liste de tâches en cours d'exécution, à l'aide des objets ("item") définissant la structure des tâches, ("blocClist") des listes de tâches, et des objets définissant la structure des ensembles de commentaires, ainsi que des liens de référence établis entre ces objets.

## Patentansprüche

1. Verfahren zur Strukturierung einer Einheit von Informationen, die in einem industriellen Prozeß verwendet werden, bei dem ein Terminal (4, 5, 6) eingesetzt wird, das einen Prozessor (2), einen Bildschirm (8) und eine Tastatur (9 bis 44) aufweist, mit der auf Befehle zugegriffen werden kann, die es erlauben, grafische Symbole und ihre Eigenschaften einzugeben und am Bildschirm darzustellen, um eine Grafik zu erstellen (Figur 2), die ein Strukturmodell von Informationen darstellt, wobei diese Grafik zumindest Symbole eines ersten Typs, die Knoten darstellen, und Symbole eines zweiten Typs, die Verbindungen zwischen den Knoten herstellen, verwendet, wobei das Verfahren die folgenden sukzessiven Phasen umfaßt:
- die schrittweise Zerlegung der Einheit von Informationen in Untereinheiten und die Identifizierung der Struktur jeder einzelnen derselben;
- die Gruppierung der Untereinheiten in Objekten nach analogen Strukturen;
- die Bestimmung von jedem Objekt eigenen Merkmalen;
- die Eingabe von Befehlen in das Terminal, welche die Anzeige jedes Objekts in Form eines Symbols vom Typ Knoten ("CTABLE", "TITLE", "COLDEF", "CTABHEAD", "CTABBODY") und seiner Eigenschaften ("colsep", "rowsep", "totalcol") sicherstellen;
- die Eingabe von Symbolen von der Art einer Konstruktionsverbindung zwischen den Objekten in das Terminal, unter Angabe ihrer Typen und ihrer Eigenschaften, wobei diese Verbindungen eine hierarchische Einschluß-Beziehung zwischen zwei Objekten angeben;
- die Erzeugung des Strukturmodells (Figur 3) der Einheit von Informationen, die in einer geeigneten Informatiksprache ausgedrückt wird, durch den Prozessor, ausgehend von der in das Terminal eingegebenen Grafik, und
- die Steuerung der Kohärenz des Modells durch den Prozessor.

2. Verfahren nach Anspruch 1, dadurch gekennzeichnet, daß es die Eingabe von Symbolen vom Typ Bezugsverbindung in das Terminal umfaßt, wobei jedes davon zwei Objekte verbindet, um anzuzeigen, daß die entsprechenden Einheiten von Informationen sich aufeinander beziehen.

3. Verfahren nach einem der vorhergehenden Ansprüche, dadurch gekennzeichnet, daß eine Liste von Untereinheiten mit analogen Strukturen durch ein einziges Objekt ("COLDEF") in einem Strukturmodell dargestellt ist.

4. Verfahren nach einem der vorhergehenden Ansprüche, dadurch gekennzeichnet, daß eine Untereinheit, die nicht systematisch in allen von demselben Modell strukturierten Informationseinheiten erscheint, in dem Strukturmodell durch ein optionales Objekt ("TITLE") dargestellt wird.

5. Verfahren nach einem der vorhergehenden Ansprüche, dadurch gekennzeichnet, daß ein erstes Objekt eines Strukturmodells über Konstruktionsverbindungen hierarchisch mit mehreren zweiten Objekten derart verbunden sein kann, daß sich Strukturen der folgenden Arten bilden:
- "alternativ" ("CHO"), wobei ein einziges der zweiten Objekte in jeder von diesem Modell strukturierten Informationseinheit erscheinen muß;
- "Sequenz" ("SEQ"), wobei die zweiten Objekte immer in einer in der Grafik angegebenen Reihenfolge in allen von diesem Modell strukturierten Informationseinheiten erscheinen; und
- "Aggregat" ("AGR"), wobei die zweiten Objekte in einer beliebigen Reihenfolge in den von diesem Modell strukturierten Informationseinheiten erscheinen;
wobei diese Typen in beliebiger Weise miteinander kombiniert werden können.

6. Verfahren nach einem der vorhergehenden Ansprüche, dadurch gekennzeichnet, daß die Eigenschaften eines Objektes einen Typ und einen mit diesem Typ kompatiblen Vorgabewert umfassen.

7. Verfahren nach einem der vorhergehenden Ansprüche, dadurch gekennzeichnet, daß es die Eingabe von Symbolen des Typs Rekursivitätsverbindung in das Terminal umfaßt, wobei diese ein Objekt mit sich selbst verbindet, um anzuzeigen, daß die Struktur des Objektes ("blocClist") selbst aus gleichen Objekten zusammengesetzt ist.

8. Verfahren nach einem der vorhergehenden Ansprüche, dadurch gekennzeichnet, daß es die Überprüfung der Gültigkeit jedes in das Terminal eingegebenen Befehls durch den Prozessor umfaßt.

9. Verfahren nach einem der vorhergehenden Ansprüche, dadurch gekennzeichnet, daß es die Umwandlung eines in Informatiksprache ausgedrückten Strukturmodells in eine gemäß dem Verfahren erzeugte Grafik umfaßt.

10. Verfahren nach einem der Ansprüche 2 bis 9, dadurch gekennzeichnet, daß es sich bei einer Bezugsverbindung, die ein erstes mit einem zweiten Objekt verbindet, um einen der folgenden Typen handeln kann:
- "Knoten-Sohn" zeigt an, daß eine Bezugsverbindung zwischen dem ersten Objekt und allen direkt im zweiten Objekt eingeschlossenen Objekten hergestellt wird,
- "Sohn-Knoten" zeigt an, daß eine Bezugsverbindung zwischen allen direkt in dem ersten Objekt enthaltenen Objekten und dem zweiten Objekt gebildet wird,
- "Sohn-Sohn" gibt an, daß eine Bezugsverbindung zwischen allen direkt im ersten Objekt enthaltenen Objekten und allen direkt im zweiten Objekt enthaltenen Objekten hergestellt wird, und
- "Bruder-Bruder" verbindet ein erstes Objekt mit sich selbst, um Bezugsverbindungen zwischen allen direkt im ersten Objekt enthaltenen Objekten zu bilden.

11. Verfahren nach einem der vorhergehenden Ansprüche, dadurch gekennzeichnet, daß es die Konstruktion einer als Instanz bezeichneten Grafik (Figur 6) umfaßt, die Knoten sowie Konstruktions- und Bezugsverbindungen zwischen den Knoten aufweist, wobei diese Grafik durch Anwendung eines Strukturmodells auf eine vorgegebene Einheit von Informationen erhalten wird, jeder ihrer Knoten einer bestimmten Untereinheit der Informationseinheit entspricht, jede ihrer Konstruktionsverbindungen eine Einschlußbeziehung zwischen zwei Untereinheiten herstellt und jede ihrer Bezugsverbindungen der Ausgangsuntereinheit der Verbindung gestattet, sich auf die Zieluntereinheit zu beziehen.

12. Anwendung des Verfahrens nach einem der vorhergehenden Ansprüche zur Unterstützung der Steuerung eines Fahrzeugs, dadurch gekennzeichnet, daß sie mit einer Einheit arbeitet, die aus einer Vielzahl von Checklisten besteht, welche die im Laufe jeder Steuerungsphase auszuführenden Aktionen und Überprüfungen festlegen, wobei diese Einheit im Speicher (3) eines Rechners (2) auf der Basis von an Bord des Fahrzeugs untergebrachten Prozessoren gespeichert ist und wenigstens ein Terminal zur Kommunikation Mensch/Maschine (4, 5, 6) aufweist, wobei die Anwendung folgendes umfaßt:
- den automatischen Ablauf der Verarbeitung der Checklisten auf dem Bordterminal mit Hilfe des Objektes ("checklist"), das die Struktur der Einheit der Checklisten festlegt, deren Aufteilung in Objekte ("blocClist"), die jeweils die Struktur einer Checkliste darstellen, die Reihenfolge des Ablaufs der Listen definiert;
- den automatischen Ablauf der Ausführung der Aufgaben der in Bearbeitung befindlichen Liste auf dem Bordterminal mittels des Objektes ("blocClist"), das die Struktur dieser Liste definiert und dessen Aufteilung in Objekte ("item"), welche die Struktur der Aufgaben darstellen, deren Ablaufreihenfolge festlegt.

13. Anwendung nach Anspruch 12, dadurch gekennzeichnet, daß sie die automatische Auslösung der Ausführung der geeigneten Checkliste auf dem Terminal, sobald sich eine Panne ereignet, mit Hilfe der die Pannen definierenden Objekte, der Objekte ("blocClist"), welche die Struktur der Checklisten definieren, die die Behebung der Pannen erlauben, und der zwischen diesen Objekten hergestellten Bezugsverbindungen umfaßt.

14. Anwendung nach einem der Ansprüche 12 und 13, dadurch gekennzeichnet, daß sie die Anzeige von Kommentaren, welche die in der Ausführung begriffene Aufgabe bzw. Checkliste betreffen, mit Hilfe der Objekte ("item"), welche die Struktur der Aufgaben ("blocClist") der Checklisten definieren, und der Objekte, welche die Struktur der Einheiten von Kommentaren festlegen, sowie der zwischen diesen Objekten gebildeten Bezugsverbindungen, auf dem Bildschirm des Terminals erlaubt.

## Claims

1. Method for structuring a set of information used in an industrial process, using a terminal (4, 5, 6) comprising a processor (2), a screen (8) and a keyboard (9 to 44) providing access to controls enabling the input and the representation on the screen of graphical symbols and their characteristics, with a view to drawing up a graph (FIG. 2) representing an information structure model, said graph using at least symbols of a first type representing nodes, and symbols of a second type establishing links between said nodes, the method including the following successive stages :
- step by step breakdown of the set of information into subsets and identification of the structure of each of the latter ;
- grouping together by similar structures of said subsets into objects ;
- determination of characteristics specific to each object ;
- input into said terminal commands ensuring the displaying of each object in the form of a node type symbol (("CTABLE", "TITLE", "COLDEF", "CTABHEAD", "CTABBODY") and of its characteristics ("colsep", "rowsep", "totalcol") ;
- input into said terminal of symbols corresponding to the construction link between objects, with specification of the types and characteristics thereof, said links indicating a hierarchical include relation between two objects ;
- production by the processor, on the basis of said graph introduced into said terminal, of the structure model (FIG. 3) of said set of information expressed in a suitable computer language, and
- monitoring by said processor of the consistency of said model.

2. Method according to claim 1, wherein it comprises the input into the terminal of reference link type symbols, each linking two objects to indicate that the corresponding information sets refer to one another.

3. Method according to one of the preceding claims, wherein a list of subsets of similar structure is represented by a single object ("COLDEF") in a structure model.

4. Method according to one of the preceding claims, wherein a subset which does not systematically appear in all the information sets structured by the same model, is represented by an optional object ("TITLE") in the structure model.

5. Method according to one of the preceding claims, wherein a first object of a structure model can be hierarchically linked by construction links to plural second objects so as to form structures of the following types :
- "alternative" ("CHO"), in which just one of said second objects must appear in each set of information structured by this model ;
- "sequence" ("SEQ"), in which said second objects always appear in the order indicated on the graph in all the information sets structured by this model ; and
- "aggregate" ("AGR"), in which said second objects appear in any order in the information sets structured by this model ;
these types being combinable in any way whatsoever.

6. Method according to one of the preceding claims, wherein the characteristics of an object comprise a type and a default value compatible with said type.

7. Method according to one of the preceding claims, wherein it comprises input into said terminal of recursion link type symbols linking an object to itself to indicate that the structure of said object ("blocClist") is itself comprised of the same objects.

8. Method according to one of the preceding claims, wherein it comprises monitoring by the processor of the validity of each command input into said terminal.

9. Method according to one of the preceding claims, wherein it comprises conversion of a structure model expressed in computer language, into a graph drawn up according to the method.

10. Method according to one of claims 2 to 9, wherein a reference link linking a first object to a second object can be of one of the following types :
- "node-sons", indicating that it establishes a reference link between said first object and all the objects directly included in said second object,
- "sons-node", to indicate that it establishes a reference link between all the objects directly included in said first object, and said second object,
- "sons-sons" to indicate that it establishes a reference link between all the objects directly included in said first object and all the objects directly included in said second object, and
- "brother-brother" linking a first object to itself to establish reference links between all the objects directly included in said first object.

11. Method according to one of the preceding claims, wherein it comprises the construction of a graph called an instance (FIG. 6) comprising nodes and construction and reference links between said nodes, said graph being obtained by applying a structure model to a given set of information, each of its nodes corresponding to a particular subset of said set of information, each of its construction links establishing an include relation between two subsets, and each of its reference links enabling a source subset to refer to a destination subset.

12. Application of the method, according to one of the preceding claims, to vehicle piloting assistance, wherein it uses a set comprising a plurality of lists of tasks defining the actions and checks to be carried out at each piloting stage, said set being stored in the memory (3) of a computer (2) based on processors taken on board the vehicle, and comprising at least one man/machine communications terminal (4, 5, 6), said application comprising :
- automatic concatenation on said on-board terminal of the processing of said checklists, by means of the object ("checklist") defining the structure of said set of task lists, of which the breakdown into objects ("blocClist"), each representing the structure of a task list, defines the order of concatenation of said lists ;
- automatic concatenation on said on-board terminal of performance of said tasks in said list being processed, by means of said object ("blocClist") which defines the structure of said list, and of which the breakdown into objects ("item"), representing the structure of said tasks, defines the order of concatenation.

13. Application according to claim 12, wherein it comprises the automatic triggering on said terminal of performance of the appropriate list of tasks in the event of a failure, by means of the objects identifying the failures, of the objects ("blocClist") defining the structure of the list of tasks enabling said failures to be processed, and of the reference links established between said objects.

14. Application according to claim 12 or 13, wherein it comprises viewing, on the screen of said terminal, of comments relating to the task and task list being performed, by means of the objects ("item") defining the structure of said tasks ("blocClist"), of the task lists, and of the objects defining the structure of the sets of comments, as well as the reference links established between said objects.
